Europäisches Patentamt

European Patent Office

Office européen des brevets

(11) Publication number: **0 054 352**
**B1**

(12) **EUROPEAN PATENT SPECIFICATION**

(45) Date of publication of patent specification: **14.05.86**

(51) Int. Cl.⁴: **F 16 J 15/20**

(21) Application number: **81305208.1**

(22) Date of filing: **02.11.81**

(54) Glands and gland packings.

(30) Priority: **04.11.80 ZA 806780**
**08.12.80 ZA 807645**

(43) Date of publication of application:
**23.06.82 Bulletin 82/25**

(45) Publication of the grant of the patent:
**14.05.86 Bulletin 86/20**

(84) Designated Contracting States:
**AT BE CH DE FR GB IT LI LU NL SE**

(56) References cited:
**DE-B-1 217 716**
**DE-C- 703 803**
**FR-A- 449 755**
**FR-A-2 087 356**
**GB-A- 528 359**

(73) Proprietor: **FINRECO (PROPRIETARY) LIMITED**
**Eighth Floor Clegg House Simmons Street**
**Johannesburg (ZA)**

(72) Inventor: **Robins, George Albert**
**6 Upper Park Drive Forest Town**
**Johannesburg (ZA)**

(74) Representative: **Cook, Anthony John**
**D. YOUNG & CO. 10, Staple Inn**
**London, WC1V 7RD (GB)**

Courier Press, Leamington Spa, England.

## Description

This invention relates to glands and to packings therefore.

This invention is concerned with a packed gland comprising a stuffing box through which a shaft passes, packings within the stuffing box bearing on the shaft and a gland follower acting on the packings to force them into the appropriate sealing position. Such a packed gland is hereinafter called "a gland of the kind set forth".

Gland packings, in use, are generally supplied in lengths of material impregnated with lubricant. A workman replacing gland packings will first have to cut such material to length and then force it into the stuffing box about the shaft to form a ring. This is repeated for all the packings. The lubricant with which the material is impregnated being often oil based, handling the packings in such cases dirties the hands of the workman. Also the workman must often work in very awkward positions. Furthermore because of the difficulty in handling the packing the down-time for a pump which has to have its glands re-packed tends to be considerable.

Furthermore there tends to be considerable wastage of the packing material because the workman must estimate the amount of material to form a packing and then cut the material to this length. The wastage of packing material, which is often expensive, can be substantial.

Conventional packings tend to be impregnated throughout their entire cross-section but the lubricant which is used is that which is adjacent to the shaft. Thus the remaining lubricant is in general unused. Consequently, the useful life of the packing is determined usually by the amount of lubricant at the shaft.

The patent literature contains prior proposals of which the following merit mention. DE—C—703,803 discloses a sealing ring which is made of metal. Resilience to secure good sealing is obtained by the formation of the cross-section of the ring into U or V shape enabling the legs to be splayed apart with a certain degree of resilience.

FR—A—449,755 shows a packing ring in which the outer part is made in sections which react in opposite directions. This patent does not teach the use of the central core space of a hollow ring as a lubricant reservoir.

FR—A—2,087,356 discloses a packing ring having an inner core which may be of metal and may be hollow. It may also contain a lubricant but there is no plurality of apertures and it is not contemplated to provide controlled outward flow of the lubricant.

GB—A—528,359 discloses a packing ring which is hollow and contains liquid. It does not contain lubricant and does not have apertures out of which the lubricant can flow. The purpose of the liquid in the packing ring is to render the package ring useful with shafts which are non-circular, to provide the best deformation of the ring to give good sealing over a small contact area.

According to the invention there is provided a packing and sealing ring comprising a hollow cored ring of deformable material containing lubricant and having a plurality of peripherally-spaced radial openings through the inner part of the wall of the ring through which the lubricant can escape, characterised by an outer cover of braided fibrous material, the ring being formed from a predetermined length of elastic material with the ends of the latter releasably joined together by a hollow connector piece into the ends of the ring.

This ring is preferably arranged so that it will discharge lubricant in a predetermined direction, which will normally be between stationary and moving parts and in a pump normally radially inwardly towards the shaft. In this way the lubricant will be directed towards the shaft and most of the lubricant will be put to its intended use.

Preferably the containment comprises a material which will not glaze, crystallize or break down into hard particles during normal use. The factors determining selection will include shaft peripheral speed, stuffing box pressures and characteristics of the product being pumped.

This material preferably comprises cotton, flax, asbestos (pure or of commercial trade), aramid fibre, graphite fibre, polytetrafluoroethylene (PTFE), or similar natural or synthetic material arranged into a porous form preferably by braiding or weaving so that the lubricant can escape therethrough.

According to another aspect of the invention there is provided a lubricant device having a resiliently deformable hollow, preferably rubber or rubber-like material, member containing lubricant, there being openings passing through the inner portions of the member through which the lubricant can escape. Preferably the ring has a cover comprising a material which will not score or otherwise damage a pump shaft. It will be understood by those skilled in the art that any material when bearing heavily on a shaft rotating at high speed will score the shaft if it is unlubricated. However there are a number of materials which when impregnated with lubricant or low friction material such as PTFE will not damage the shaft. Typical of such materials are those mentioned above.

This lubricant device preferably also serves as a seal for the shaft and the stuffing box.

The member preferably has a substantial resistance to deformation. The wall thickness of the member may be quite substantial being preferably between 7½% and 30%, preferably between 10% and 20%, of the outside diameter of the member. Thus in two typical embodiments, a member which is of 15,5 mm outside diameter has a wall thickness of 3 mm and a member of 16 mm outside diameter has a wall thickness of 2 mm. Naturally however the wall thicknesses vary with other characteristics and dimensions of the member and the environment in which the device is to be used.

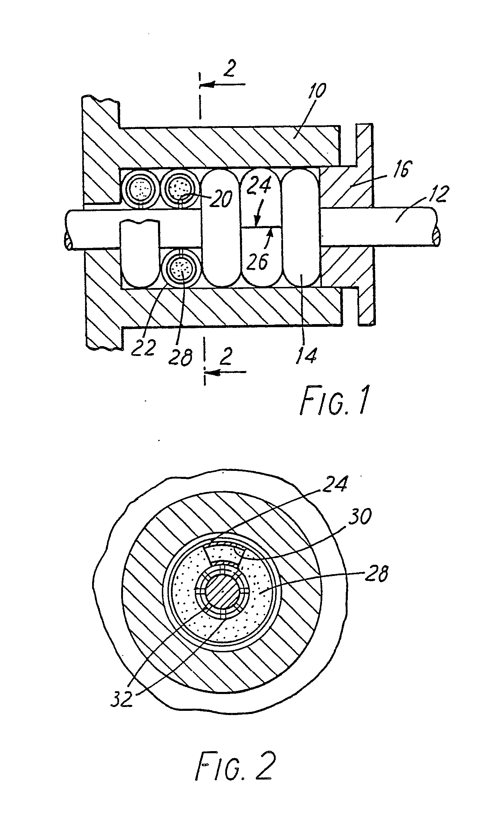

Figure 1 is a section through a stuffing box of the invention, and

Figure 2 is a detail showing a lubricant ring during adjustment of the gland.

Referring now to the drawings, there is shown a stuffing box 10 for a rotary pump, through which the pump shaft 12 passes. Within the stuffing box are five lubricating and sealing rings 14 (five in all) which are held in position by a gland follower 16. These rings 14 seal the shaft 12 and the stuffing box 10.

Each lubricating ring 14 comprises an hollow, circular section, toroidal, elastomeric, inner member 20 which is covered with a braided fibrous outer cover 22.

The rubber inner member 20 is formed as an elongated elastomeric extrusion and has the cover 22 braided therearound. Thereafter the ring 20 is wound about a former mandrel (not shown) so that it takes up the appropriate diameter and is cured in this position. The extruded rubber material is then cut to have two ends 24 and 26. It is filled with lubricant 28 of fairly high viscosity. A short rigid elastomeric tube 30, which is a force fit into the inner member 20 is fitted into the ends 24 and 26 so that a complete ring is thus formed.

Apertures 32 are drilled or punched into the radially inner portion of the ring 14 (through both the inner member 20 and the cover 22) to permit lubricant 28 to escape therefrom. These apertures 32 are equispaced from one another and conveniently there are six to eight such apertures 32 depending upon the inner diameter of the ring.

The elastomer of the member 20 is of substantial resilience to have a memory as will be described below.

To insert the sealing rings 14 into the stuffing box which has been previously cleaned out, a workman will merely open the ring 14 out, by pulling one end 24 off the rigid tube 30. He will then fit the ring 14 about the shaft 12, reconnect the ring 14 and force it into the stuffing box 10. The remaining rings will be similarly fitted. The gland follower 18 is tightened somewhat to cause the sealing rings 14 to seal against the shaft 12 and the internal wall of the stuffing box 10. The task can be accomplished quickly and efficiently and relatively cleanly.

Due to the compression, the lubricating ring 14 will eject lubricant 28 from the apertures 32. This lubricant will lubricate the shaft 12 particularly at pump start-up.

As the pump runs, some of the lubricant thus ejected is washed away by the liquid being pumped, or by the gland service water. Consequently the ring 14 will heat up and this will cause the lubricant in the ring to be expelled, further lubricating the shaft 12. In due course when wear takes place, the gland follower 18 will be tightened again and more lubricant will be ejected.

Because of the memory of the rubber, there will be a substantial force against which the gland follower 18 has to work. Thus not all the lubricant will be discharged on initial tightening of the gland follower 18.

The sealing rings 14 work extremely efficiently.

They have a long effective working life. Because of the resilience of the inner elastomeric member, the sealing ring 14 takes up and accommodates vibratory movements and whips of the shaft 12 while maintaining sealing contact therewith. The resilience of the ring 14 also resists the force of the gland follower so that not all the lubricant is discharged initially but that more can be discharged during operation by further tightening the gland follower.

The lubricating rings 14 are conveniently provided in individual, preferably vacuum packed, units. Thus a workman will be given precisely the correct amount of material on his request, thereby substantially reducing wastage. Furthermore, the workman will not be troubled with having to cut packing material to size as is required with conventional packing materials.

The invention is not limited to the precise constructional details hereinbefore described and illustrated in the drawings. For example, the stuffing box may be packed with one or more lubricating rings 14 together with conventional packings. The cover may comprise knitted or woven fabric. It may comprise any of the materials mentioned above and it may also be covered with mica flakes, graphite molybdenum disulphide or the like.

For high pressure work, the inner member may comprise reinforcing which conveniently may be provided by an inner tubular liner within the inner member. Further at least one extra cover may be provided especially with large size sealing rings.

The sealing and lubricating ring can be used in stuffing boxes for other rotary devices such as compressors and turbines and also for reciprocating devices, in valves and in similar devices where sealing and lubrication is required.

The cross-section of the lubricating and sealing ring may be oval, square, rectangular or any other suitable and/or desired cross-section.

Instead of rubber, the inner member may comprise any other suitable elastomer having the characteristics mentioned above.

The packing may comprise a singular endless spiral instead of individual rings. In this case, the ends of the hollow inner member will be plugged so that the lubricant will escape only through the pierced apertures. Suitable shoulders or steps will be provided to square the ends of the spiral.

With a suitable elastomer, e.g. silicon rubber, or viton, the sealing and lubricant ring can be comprised solely by the rubber ring and the cover omitted. In this case, the ring will be moulded to the cross-section of the space between the shaft and the internal wall of the stuffing box.

**Claims**

1. A packing and sealing ring comprising a hollow cored ring (20) of deformable material containing lubricant and having a plurality of peripherally-spaced radial openings (32) through the inner part of the wall of the ring through which the lubricant can escape, characterised by an outer cover (22) of braided fibrous material, the ring being formed from a predetermined length of elastic material with the ends of the latter releasably joined together by a hollow connector piece (30) into the ends of the ring (20).

2. A packing and sealing ring as claimed in claim 1 in which the braided fibrous material of the cover is selected from the following: cotton, flax, asbestos, polytetrafluorethylene (PTFE), carbon fibre and aramid.

3. A ring as claimed in claims 1 or 2 in which the lubricant is of high viscosity.

4. A ring as claimed in claim 1, 2 or 3 in which the ring comprises an elastomer or rubber.

## Patentansprüche

1. Packung und Dichtungsring mit einem hohlen, mit Kern versehenen Ring (20) aus deformierbarem Material mit einem Gehalt an Schmiermittel und mit mehreren am Umfang in Abstand voneinander angeordneten radialen Öffnungen (32) durch den Innenteil der Wand des Ringes, durch welche das Schmiermittel freigegeben werden kann, gekennzeichnet durch eine Außenumhüllung (22) aus geflochtenem Fasermaterial, wobei der Ring von einer vorbestimmen Länge eines elastischen Materials gebildet ist und die Enden des letzteren durch ein hohles Verbindungstück (30) in den Enden des Ringes (20) lösbar verbunden sind.

2. Packung und Dichtungsring nach Anspruch 1, worin das geflochtene Fasermaterial der Umhüllung aus den folgenden ausgewählt ist: Baumwolle, Flachs, Asbest, Polytetrafluroethylen (PTFE), Kohlenstoffaser und Aramid.

3. Ring nach Anspruch 1 oder 2, worin das Schmiermittel hohe Viskosität hat.

4. Ring nach Anspruch 1, 2 oder 3, worin der Ring ein Elastomeres oder einen Kautschuk umfaßt.

## Revendications

1. Joint d'étanchéité comprenant un anneau à âme creuse (20) en matière déformable contenant du lubrifiant et présentant une série d'ouvertures radiales périphériquement espacées (32) ménagées à travers la partie intérieure de la paroi de l'anneau à travers lesquelles le lubrifiant peut s'échapper, caractérisé par une gaine extérieure (22) en matière fibreuse tressée, l'anneau étant façonné à partir d'une longueur déterminée de matière élastique dont les extrémités sont réunies ensemble de manière amovible par une piéce-raccord creuse (30) pénétrant dans les extrémités de l'anneau (20).

2. Joint d'étanchéité selon la revendication 1 dans lequel la matière fibreuse tressée de la gaine est choisie parmi les suivantes; coton, lin, amiante, polytétrafluoréthylène (PTFE), fibre de carbone et aramide.

3. Joint selon la revendication 1 ou 2 dans lequel le lubrifiant est à forte viscosité.

4. Joint selon la revendication 1, 2 ou 3 dans lequel l'anneau est constitué par un élastomère en caoutchouc.

FIG.1

FIG. 2

1